# EUROPEAN PATENT APPLICATION

(11) **EP 4 571 964 A1**
(43) Date of publication of application: **18.06.2025**
(21) Application number: 23904006.6
(22) Date of filing: 13.12.2023
(51) Int. Cl.: H01M 50/167, H01M 50/186, H01M 50/107, H01M 50/152

(54) **BATTERY, AND BATTERY PACK AND VEHICLE COMPRISING BATTERY**

(30) Priority: 13.12.2022 KR 20220174042
(71) Applicant: LG Energy Solution, Ltd., Seoul 07335 (KR)
(72) Inventor: KO, Kwang-Hun, Daejeon 34122 (KR); CHOI, Su-Ji, Daejeon 34122 (KR); KIM, Do-Gyun, Daejeon 34122 (KR); LEE, Da-Som, Daejeon 34122 (KR); HWANGBO, Kwang-Su, Daejeon 34122 (KR)
(74) Representative: Goddar, Heinz J.
(86) International application number: PCT/KR2023/020556
(87) International publication number: WO 2024/128806

(57) **Abstract**

A battery according to an embodiment of the present disclosure may include an electrode assembly; a battery housing configured to accommodate the electrode assembly through an opening formed on one side; a cap configured to cover the opening of the battery housing; and a gasket interposed between the cap and the inner surface of the battery housing and at least partially compressed, and having a protrusion on a surface facing the cap that protrudes in a direction toward the cap based on a state before being compressed.

## Description

### TECHNICAL FIELD

The present disclosure relates to a battery, and a battery pack and a vehicle including the same.

The present application claims priority to Korean Patent Application No. 10-2022-0174042 filed on December 13, 2022 in the Republic of Korea, the disclosures of which are incorporated herein by reference.

### BACKGROUND ART

Batteries have high applicability according to product groups and electrical characteristics such as high energy density, and thus are commonly applied not only to portable devices but also to electric vehicles (EVs), hybrid electric vehicles (HEVs), and the like driven by electric power sources.

Such batteries are attracting attention as a new energy source to improve eco-friendliness and energy efficiency in that it has not only a primary advantage of dramatically reducing the use of fossil fuels, but also no by-products generated from the use of energy.

Batteries widely used at present include lithium-ion batteries, lithium polymer batteries, nickel cadmium batteries, nickel hydrogen batteries, nickel zinc batteries, and the like. An operating voltage of such a unit battery cell is about 2.5 V to 4.5 V. Therefore, if a higher output voltage is required, a plurality of batteries may be connected in series to configure a battery pack. In addition, depending on the charge/discharge capacity required for the battery pack, a plurality of batteries may be connected in parallel to configure a battery pack. Thus, the number of batteries included in the battery pack and the type of electrical connection may be variously set according to the required output voltage and/or the demanded charge/discharge capacity.

If an abnormality occurs in the course of using a battery, the internal pressure of the battery may increase, and a thermal event may spread as high-temperature gas and/or flames are generated therein. When such a thermal event occurs in a battery having high capacity and/or high power, it may cause even greater damage.

In preparation for this, a venting portion may be applied to the battery to release internal gas when the internal pressure increases above a certain level. However, when a sealing portion for sealing the battery is not designed robustly, it may not operate smoothly at predictable times. In addition, when the sealing portion for sealing the battery is not designed robustly, it may be impossible to guide venting in a desired direction through the venting portion. In addition, when the sealing portion for sealing the battery is not designed robustly, there may be a problem that a leak may occur in the sealing portion due to changes in internal pressure even under normal use of the battery, thereby causing leakage of electrolytes.

Therefore, there is a need to develop a battery configured to prevent the sealing portion of the battery from being broken when an abnormality occurs in the course of using the battery and thus the internal pressure increases abnormally or when the internal pressure increases under normal use.

### DISCLOSURE

### Technical Problem

The present disclosure is designed to solve the problems of the related art, and therefore the present disclosure is directed to providing a battery configured to prevent the sealing portion of the battery from being broken when an abnormality occurs in the course of using the battery and thus the internal pressure increases abnormally or when the internal pressure increases under normal use.

However, technical problems to be solved by the present disclosure are not limited to the above-described problems, and other problems not mentioned herein may be clearly understood by those skilled in the art from the following description of the present disclosure.

### Technical Solution

A battery according to an embodiment of the present disclosure for solving the above-described problem may include an electrode assembly; a battery housing configured to accommodate the electrode assembly through an opening formed on one side; a cap configured to cover the opening of the battery housing; and a gasket interposed between the cap and the inner surface of the battery housing and at least partially compressed, and having a protrusion on a surface facing the cap that protrudes in a direction toward the cap based on a state before being compressed.

The protrusion may be provided in plurality, and the plurality of protrusions may be provided along a direction parallel to the direction from the outer side of the battery housing toward the inner side thereof.

The gasket may have a flat shape with no protrusions appearing on the surface facing the cap while being compressed between the cap and the inner surface of the battery housing.

An empty space may be formed between adjacent protrusions while the gasket is compressed between the cap and the inner surface of the battery housing.

The gasket may be configured to have different compression rates in an area where the protrusion is provided and in an area where the protrusion is not provided.

The battery housing may have a shape bent to surround an edge peripheral area of the cap on the opening side.

The gasket may be configured to be bent into a shape corresponding to the bent shape of the battery housing to surround an edge peripheral area of the cap.

The protrusion may be provided in at least one of an area facing the inner surface of the cap and an area facing the outer surface of the cap in the gasket.

The cap may have a venting portion configured to be weaker compared to the rest of the cap.

The cap may be configured not to be electrically connected to the electrode assembly.

The cap may have an insertion portion inserted into an empty space formed between a pair of adjacent protrusions.

The gasket may have a sub-protrusion that protrudes toward the inner surface of the battery housing based on a state before being compressed.

A battery pack according to an embodiment of the present disclosure may include the battery.

A vehicle according to an embodiment of the present disclosure may include the battery pack.

### Advantageous Effects

According to one aspect of the present disclosure, it is possible to prevent a sealing portion of a battery from being broken when an abnormality occurs in the course of using the battery and thus the internal pressure increases abnormally or when the internal pressure increases under normal use.

However, the advantageous effects to be obtained by the present disclosure are not limited to the above-described effects, and other advantageous effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view showing the structure of an upper portion of a battery according to an embodiment of the present disclosure.
FIG. 2 is a view showing the structure of a gasket of the present disclosure.
FIGS. 3 and 4 are views showing a state in which a gasket of the present disclosure is compressed by a cap.
FIG. 5 is a partial enlarged view of FIG. 1.
FIG. 6 is a view showing the structure of a gasket of the present disclosure, which shows an embodiment different from that of the gasket shown in FIG. 2.
FIG. 7 is a view showing a battery structure having a venting portion.
FIG. 8 is a view showing the structure of a lower portion of a battery according to an embodiment of the present disclosure.
FIG. 9 is a view showing an insertion portion provided in a cap of the present disclosure.
FIG. 10 is a view showing the structure of a gasket of the present disclosure, which shows an embodiment different from those of the gasket shown in FIGS. 2 and 6.
FIG. 11 is a view showing a battery pack according to an embodiment of the present disclosure.
FIG. 12 is a view showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

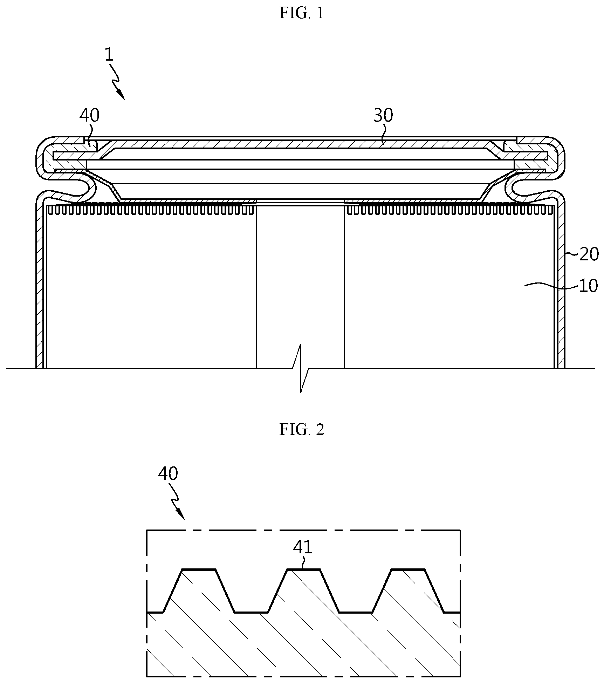

A battery 1 according to an embodiment of the present disclosure will be described with reference to FIGS. 1 to 5.

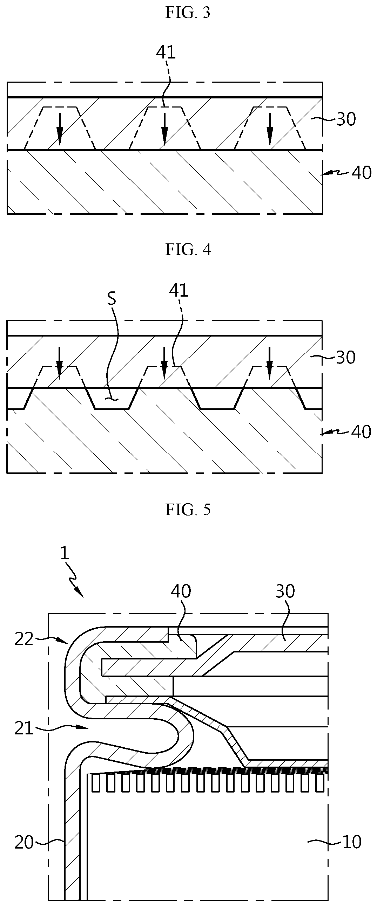

FIG. 1 is a view showing the structure of an upper portion of a battery according to an embodiment of the present disclosure, FIG. 2 is a view showing the structure of a gasket of the present disclosure, FIGS. 3 and 4 are views showing a state in which a gasket of the present disclosure is compressed by a cap, and FIG. 5 is a partial enlarged view of FIG. 1.

First, referring to FIGS. 1 to 4, the battery 1 according to an embodiment of the present disclosure may include an electrode assembly 10, a battery housing 20, a cap 30, and a gasket 40. The battery 1 may be a secondary battery. The battery 1 may be a cylindrical battery.

The electrode assembly 10 may include a first electrode (a positive electrode or a negative electrode), a second electrode (an electrode having an opposite polarity to the first electrode), and a separator interposed between the first electrode and the second electrode. The electrode assembly 10 may be, for example, a jelly roll type electrode assembly formed by winding a laminate including the first electrode, the second electrode, and the separator.

The battery housing 20 may be configured to accommodate the electrode assembly 10 through an opening provided on one side. The battery housing 20 may include a conductive metal. The battery housing 20 may be electrically connected to the electrode assembly 10. An electrolyte may be accommodated in the battery housing 20 together with the electrode assembly 10.

The cap 30 may be configured to cover the opening of the battery housing 20. The cap 30 may include metal. A gasket 40 to be described later may be applied to the opening of the battery housing 20 covered by the cap 30, thereby improving the sealing force at the opening of the battery housing 20 covered by the cap 30.

The gasket 40 may be interposed between the cap 30 and the inner surface of the battery housing 20. The gasket 40 may include an elastic material. The gasket 40 may include an insulating material. When the gasket 40 functions as an insulator, insulation between the cap 30 and the battery housing 20 may be achieved. However, in the present disclosure, the gasket 40 need not necessarily function as an insulator. The battery 1 of the present disclosure may have a structure in which the cap 30 is not electrically connected to the electrode assembly 10, and in this case, the cap 30 may not function as a terminal of the battery 1.

The gasket 40 may be at least partially compressed between the cap 30 and the battery housing 20. The gasket 40 may have a protrusion 41. The protrusion 41 may be provided on a surface of the outer surface of the gasket 40, which faces the cap 30. The protrusion 41 may have a protruding shape in a direction toward the cap 30.

The structure provided with the protrusion 41 on the outer surface of the gasket 40 may be a structure that appears in a state before the gasket 40 is interposed between the cap 30 and the inner surface of the battery housing 20 and compressed.

The protrusion 41 may not appear while the gasket 40 is interposed between the cap 30 and the battery housing 20 and compressed as shown in FIG. 3. That is, the gasket 40 may have an approximately flat shape with no protrusions 41 appearing on the surface facing the cap 30 in a compressed state between the cap 30 and the inner surface of the battery housing 20. In contrast, the protrusion 41 may partially appear even while the gasket 40 is interposed between the cap 30 and the battery housing 20 and compressed as shown in FIG. 4. As shown in FIG. 4, when the protrusion 41 partially appears even in a compressed state, an empty space S may be formed between a pair of adjacent protrusions 41. The empty space S may be surrounded by a pair of adjacent protrusions 41 and the cap 30.

Meanwhile, when viewed in a compressed state between the cap 30 and the battery housing 20, the gasket 40 may have different compression rates in an area where the protrusion 41 is provided and in an area where the protrusion 41 is not provided. In the gasket 40, the compression rate in the area where the protrusion 41 is provided may be formed to be greater than the compression rate in the area where the protrusion 41 is not provided.

This phenomenon of different compression rates for each area may be common when the gasket 40 in a compressed state has a flat shape as shown in FIG. 3 and when the gasket 40 in a compressed state has a shape where the protrusion 41 partially protrudes as shown in FIG. 4.

When the gasket 40 is provided with the protrusion 41 in this way, shear resistance formed between the gasket 40 and the cap 30 in the area where the protrusion 41 is formed may increase. The protrusion 41 may have a shape in which its cross-sectional area decreases toward the end thereof. When the protrusion 41 has this shape, it is possible to further improve the effect of increasing shear resistance in the area where the protrusion 41 is formed.

The protrusion 41 may be provided in plurality. In this case, the plurality of protrusions 41 may be provided along a direction parallel to the direction from the outer side of the battery housing 20 toward the inner side thereof. When the battery 1 is a cylindrical battery, the plurality of protrusions 41 may be provided along an approximately radial direction of the battery 1. If the plurality of protrusions 41 are arranged in this manner, the shear resistance due to the plurality of protrusions 41 may be maximized when pressure is applied in the direction of opening the cap 30 according to an increase in the internal pressure of the battery 1. That is, when the internal pressure of the battery 1 increases, an opening pressure may be applied to the interface between the cap 30 and the gasket 40 in the direction from the outer side of the battery 1 toward the inner side thereof. Therefore, it may be advantageous for maximizing shear resistance if the plurality of protrusions 41 are arranged along a direction approximately parallel to the direction in which this opening pressure acts.

Referring to FIG. 5, the battery housing 20 may have a bent shape to surround an edge peripheral area of the cap 30 on the opening side. In this case, the gasket 40 may be configured to be bent into a shape corresponding to the bent shape of the battery housing 20 to surround the edge peripheral area of the cap 30.

For example, the battery housing 20 of the present disclosure may have a beading portion 21 whose outer peripheral surface is recessed inward. The battery housing 20 may have a crimping portion 22 that extends from an upper part of the beading portion 21 and has a bent shape to surround the edge peripheral area of the cap 30.

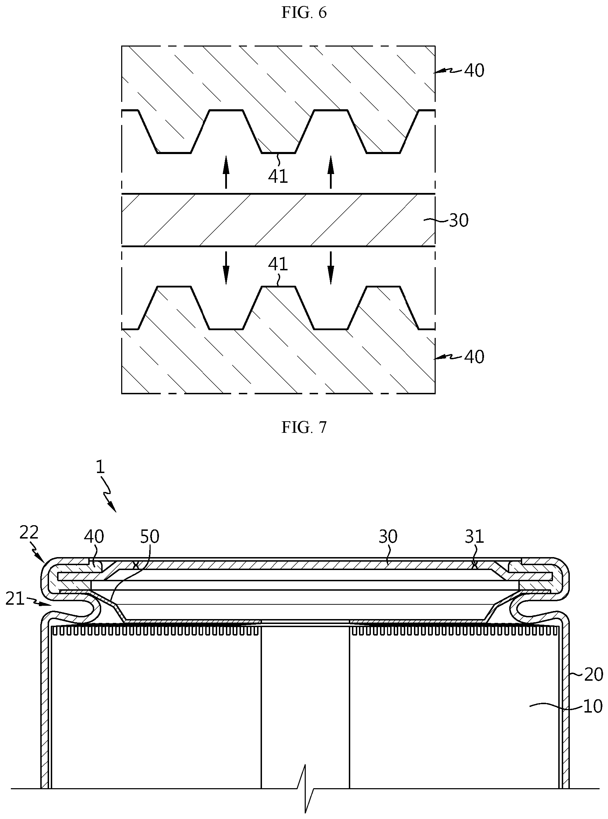

Next, referring to FIG. 6 together with FIG. 5, the formation position of the protrusion 41 will be described in the case where the battery housing 20 and the gasket 40 are configured to be bent together to surround the edge peripheral area of the cap 30 as described above.

FIG. 6 is a view showing the structure of a gasket of the present disclosure, which shows an embodiment different from that of the gasket shown in FIG. 2.

Referring to FIG. 6 together with FIG. 5, the protrusion 41 of the present disclosure may be provided in at least one of an area facing the inner surface of the cap 30 and an area facing the outer surface of the cap 30 in the gasket 40.

As previously described, the gasket 40 may be configured to be bent together with the battery housing 20 to surround the edge peripheral area of the cap 30. Accordingly, a portion of the gasket 40 may face the outer surface of the cap 30 (the upper surface of the cap 30 with reference to FIG. 6), and another portion may face the inner surface of the cap 30 (the lower surface of the cap 30 with reference to FIG. 6). In this case, the protrusion 41 may be provided in an area facing the outer surface of the cap 30 and/or in an area facing the inner surface of the cap 30.

When the protrusion 41 is provided in both the area facing the outer surface of the cap 30 and the area facing the inner surface of the cap 30, the shear resistance at the interface between the gasket 40 and the cap 30 may be maximized.

Next, a venting portion 31 provided in the cap 30 of the present disclosure will be described with reference to FIG. 7.

FIG. 7 is a view showing a battery structure having a venting portion.

Referring to FIG. 7, the cap 30 may have a venting portion 31 configured to have weaker rigidity compared to the rest of the cap 30. The venting portion 31 may be, for example, an area having a thinner thickness compared to the rest of the cap 30. The venting portion 31 may be, for example, an area where both surfaces of the cap 30 are notched. The venting portion 31 may have an extended shape to form a closed loop surrounding the center of the cap 30. The venting portion may be formed continuously or discontinuously.

As such, when the battery 1 of the present disclosure has the venting portion 31, it is possible to prevent the internal pressure of the battery 1 from increasing above a certain level even if an abnormality occurs in the battery 1. In the present disclosure, the venting timing suitable for the specifications of the battery 1 may be adjusted by appropriately adjusting the breaking strength of the venting portion 31. However, in order to adjust the venting timing using the venting portion 31, it is important to ensure that no leak occurs in areas other than the venting portion 31 until the preset venting pressure is reached. Therefore, as described above, it is necessary to increase the shear resistance at the interface between the gasket 40 and the cap 30 by applying the gasket 40 having the protrusion 41.

Meanwhile, referring to FIGS. 1 and 7, the battery 1 according to an embodiment of the present disclosure may include a current collector (a first current collector) 50. The current collector 50 may be configured to electrically connect the first electrode of the electrode assembly 10 and the battery housing 20. The current collector 50 may be disposed on one surface of the electrode assembly 10. The current collector 50 may be electrically coupled to a first uncoated portion of the electrode assembly 10. The first electrode of the electrode assembly 10 may have the first uncoated portion extending along the winding direction at one end thereof. Accordingly, the first uncoated portion may be provided on the first surface of the electrode assembly 10. The first uncoated portion may extend, for example, in an upward direction of the electrode assembly 10. The current collector 50 may be interposed between the gasket 40 and the inner surface of the battery housing 20. The current collector 50 may be coupled, for example, onto the beading portion 21 (see FIG. 5) of the battery housing 20.

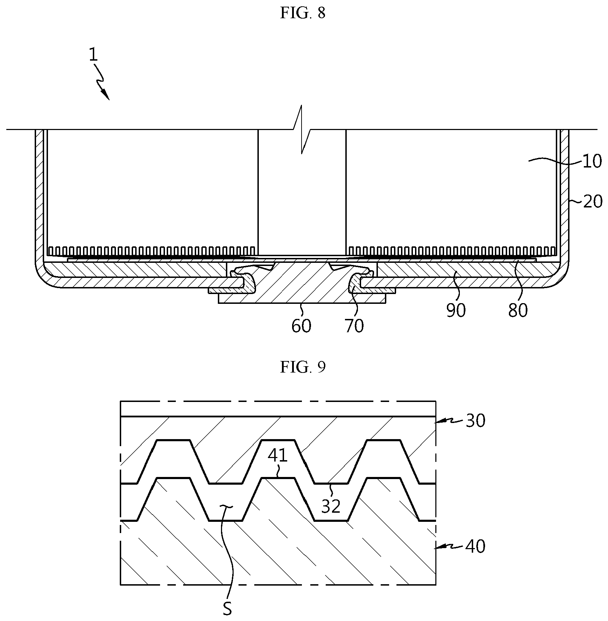

Next, the structure of a lower portion of the battery 1 according to an embodiment of the present disclosure will be described with reference to FIG. 8.

FIG. 8 is a view showing the structure of a lower portion of a battery according to an embodiment of the present disclosure.

Referring to FIG. 8, the battery 1 according to an embodiment of the present disclosure may include a terminal 60.

The terminal 60 may be configured to be electrically connected to the electrode assembly 10 through a closed portion provided on the opposite side of the opening of the battery housing 20. The terminal 60 may be configured to be exposed to the outside of the battery housing 20 through the closed portion of the battery housing 20. The terminal 60 may be riveted and fixed on the inner surface of the closed portion of the battery housing 20.

The terminal 60 may be electrically connected, for example, to a second uncoated portion of the electrode assembly 10. The second electrode of the electrode assembly 10 may have the second uncoated portion extending along the winding direction at one end thereof. Accordingly, the second uncoated portion may be provided on the second surface (a surface opposite to the first surface having the first uncoated portion) of the electrode assembly 10. The second uncoated portion may extend, for example, in a downward direction of the electrode assembly 10. As such, the terminal 60 electrically connected to the second electrode of the electrode assembly 10 may be exposed to the outside of the battery housing 20 to function as a second electrode terminal of the battery 1.

The battery 1 according to an embodiment of the present disclosure may include an insulating member 70. The insulating member 70 may be interposed between the terminal 60 and the battery housing 20. The insulating member 70 may include a material having electrical insulating properties and chemical resistance to electrolytes. The insulating member 70 may be configured to prevent electrical connection between the terminal 60 and the battery housing 20. The insulating member 70 may include a material having electrical insulating properties. The terminal 60 and the battery housing 20 may have opposite polarities, and in this case, the insulating member 70 may be configured to prevent a short circuit due to contact between the terminal 60 and the battery housing 20. In this way, the battery 1 may be configured such that the closed portion of the battery housing 20 functions as a first electrode terminal having a first polarity, and the terminal 60 functions as a second electrode terminal having a second polarity. Therefore, when a plurality of batteries 1 of the present disclosure are connected to configure a battery pack, all electrical connections may be made on one side.

The insulating member 70 may be deformed together when riveting the terminal 60 inside the battery housing 20. The insulating member 70 may be interposed between the inner surface of the closed portion of the battery housing 20 and the terminal 60 according to this deformation.

The battery 1 according to an embodiment of the present disclosure may include a current collector (a second current collector) 80. The current collector 80 may be provided between the electrode assembly 10 and the terminal 60. The current collector 80 may be configured to electrically connect the electrode assembly 10 and the terminal 60. The current collector 80 may be disposed between the electrode assembly 10 and the inner surface of the closed portion of the battery housing 20. The current collector 80 may be configured to electrically connect the second electrode of the electrode assembly 10 and the terminal 60. The current collector 80 may be electrically coupled to the second uncoated portion of the electrode assembly 10.

The battery 1 according to an embodiment of the present disclosure may include an insulator 90. The insulator 90 may be interposed between the electrode assembly 10 and the closed portion of the battery housing 20. The insulator 90 may include a material having electrical insulating properties. The insulator 90 may include an insulator hole having an inner diameter equal to or smaller than an outer diameter of the combination of the terminal 60 and the insulating member 70. The terminal 60 may be exposed toward the electrode assembly 10 through the insulator hole.

Next, an embodiment in which an insertion portion 32 is provided in the cap 30 of the present disclosure will be described with reference to FIG. 9.

FIG. 9 is a view showing an insertion portion provided in a cap of the present disclosure.

Referring to FIG. 9, the cap 30 of the present disclosure may include an insertion portion 32. The insertion portion 32 may be configured to be inserted into an empty space S formed between a pair of adjacent protrusions 41. The insertion portion 32 may have a shape in which its cross-sectional area decreases along a direction toward the gasket 40. The insertion portion 32 may be provided in an area facing the gasket 40. The insertion portion 32 may be provided on one surface or both surfaces of the cap 30. The insertion portion 32 may be provided in plurality, and in this case, each of the plurality of insertion portions 32 may be respectively inserted into a plurality of empty spaces S formed in the gasket 40.

The insertion portion 32 may be configured to compress the bottom surface of the empty space S of the gasket 40. Alternatively, the insertion portion 32 may be configured to be spaced apart from the bottom surface of the empty space S of the gasket 40. Whether the gasket 40 is compressed by the insertion portion 32 may be determined by the height of the protrusion 41 and/or the height of the insertion portion 32.

As such, when the cap 30 of the present disclosure includes the insertion portion 32, the protrusion 41 may function as a stopper during movement of the insertion portion 32 inwardly along an approximately radial direction of the battery 1, due to the matching structure of the cap 30 and the gasket 40. Alternatively, even if the protrusion 41 of the gasket 40 does not appear outwardly while the gasket 40 is compressed, the pressing force on the gasket 40 may be improved in the area where the insertion portion 32 is formed. Therefore, shear stress may be improved across the entire interface between the cap 30 and the gasket 40.

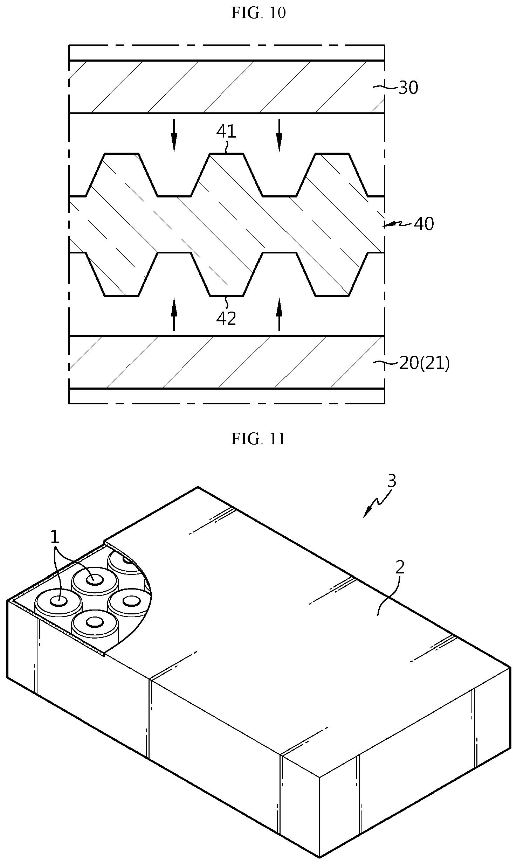

Next, a sub-protrusion 42 provided in the gasket 40 of the present disclosure will be described with reference to FIG. 10.

FIG. 10 is a view showing the structure of a gasket of the present disclosure, which shows an embodiment different from those of the gasket shown in FIGS. 2 and 6.

Referring to FIG. 10, the gasket 40 may have a sub-protrusion 42 that protrudes toward the inner surface of the battery housing 20 based on a state before being compressed. The structure provided with the sub-projection 42 on the outer surface of the gasket 40 may be a structure that appears in a state before the gasket 40 is interposed between the cap 30 and the battery housing 20 and compressed.

The sub-protrusion 42 may not appear while the gasket 40 is interposed between the cap 30 and the battery housing 20 and compressed. That is, the gasket 40 may have an approximately flat shape with no sub-protrusions 42 appearing on the surface facing the battery housing 20 in a compressed state between the cap 30 and the inner surface of the battery housing 20. In contrast, the sub-protrusion 42 may partially appear even while the gasket 40 is interposed between the cap 30 and the battery housing 20 and compressed. When the sub-protrusion 42 partially appears even in a compressed state, an empty space may be formed between a pair of adjacent sub-protrusions 42. The empty space may be surrounded by a pair of adjacent sub-protrusions 42 and the battery housing 20.

When the gasket 40 is provided with the sub-protrusion 42 in this way, shear resistance formed between the gasket 40 and the battery housing 20 in the area where the sub-protrusion 42 is formed may increase. The sub-protrusion 42 may have a shape in which its cross-sectional area decreases toward the end thereof. When the sub-protrusion 42 has this shape, it is possible to further improve the effect of increasing shear resistance in the area where the sub-protrusion 42 is formed.

The sub-protrusion 42 may be provided in plurality. In this case, the plurality of sub-protrusions 42 may be provided along a direction parallel to the direction from the outer side of the battery housing 20 toward the inner side thereof. When the battery 1 is a cylindrical battery, the plurality of sub-protrusions 42 may be provided along an approximately radial direction of the battery 1. If the plurality of sub-protrusions 42 are arranged in this manner, the shear resistance due to the plurality of sub-protrusions 42 may be maximized when pressure is applied in the direction of opening the cap 30 according to an increase in the internal pressure of the battery 1. That is, when the internal pressure of the battery 1 increases, an opening pressure may be applied to the interface between the battery housing 20 and the gasket 40 in the direction from the outer side of the battery 1 toward the inner side thereof. Therefore, it may be advantageous for maximizing shear resistance if the plurality of sub-protrusions 42 are arranged along a direction approximately parallel to the direction in which this opening pressure acts.

Next, a battery pack 3 according to an embodiment of the present disclosure will be described with reference to FIG. 11.

FIG. 11 is a view showing a battery pack according to an embodiment of the present disclosure.

Referring to FIG. 11, the battery pack 3 according to an embodiment of the present disclosure may include at least one battery 1 of the present disclosure as described above. The battery 1 may be accommodated within a pack housing 2. The battery pack 3 may include components for electrical connection of the batteries 1 and/or a battery management system (BMS) configured to control charge/discharge of the battery 1.

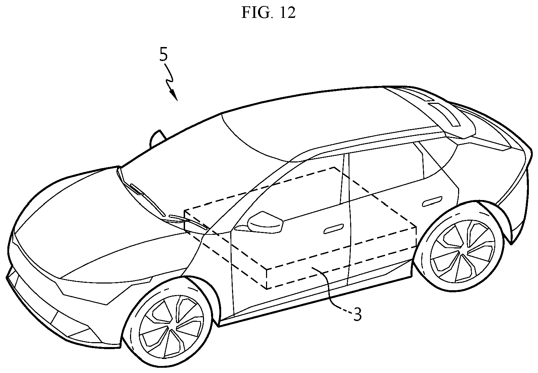

Next, a vehicle 5 according to an embodiment of the present disclosure will be described with reference to FIG. 12.

FIG. 12 is a view showing a vehicle according to an embodiment of the present disclosure.

Referring to FIG. 12, the vehicle 5 according to an embodiment of the present disclosure includes at least one battery pack 3. The vehicle 5 may be configured to operate by receiving power from the battery pack 3. The vehicle 5 may be, for example, a hybrid electric vehicle (HEV) or an electric vehicle (EV).

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of Reference Signs]

1: battery
2: pack housing
3: battery pack
5: vehicle
10: electrode assembly
20: battery housing
21: beading portion
22: crimping portion
30: cap
31: venting portion
32: insertion portion
40: gasket
41: protrusion
42: sub-protrusion
S: empty space
50: current collector (first current collector)
60: terminal
70: insulating member
80: current collector (second current collector)
90: insulator

## Claims

1. A battery, comprising:
an electrode assembly;
a battery housing configured to accommodate the electrode assembly through an opening formed on one side;
a cap configured to cover the opening of the battery housing; and
a gasket interposed between the cap and the inner surface of the battery housing and at least partially compressed, and having a protrusion on a surface facing the cap that protrudes in a direction toward the cap based on a state before being compressed.

2. The battery according to claim 1,
wherein the protrusion is provided in plurality, and the plurality of protrusions are provided along a direction parallel to the direction from the outer side of the battery housing toward the inner side thereof.

3. The battery according to claim 1,
wherein the gasket has a flat shape with no protrusions appearing on the surface facing the cap while being compressed between the cap and the inner surface of the battery housing.

4. The battery according to claim 2,
wherein an empty space is formed between adjacent protrusions while the gasket is compressed between the cap and the inner surface of the battery housing.

5. The battery according to claim 1,
wherein the gasket has different compression rates in an area where the protrusion is provided and in an area where the protrusion is not provided.

6. The battery according to claim 1,
wherein the battery housing has a shape bent to surround an edge peripheral area of the cap on the opening side.

7. The battery according to claim 6,
wherein the gasket is bent into a shape corresponding to the bent shape of the battery housing to surround an edge peripheral area of the cap.

8. The battery according to claim 7,
wherein the protrusion is provided in at least one of an area facing the inner surface of the cap and an area facing the outer surface of the cap in the gasket.

9. The battery according to claim 1,
wherein the cap has a venting portion configured to be weaker compared to the rest of the cap.

10. The battery according to claim 1,
wherein the cap is not electrically connected to the electrode assembly.

11. The battery according to claim 2,
wherein the cap has an insertion portion inserted into an empty space formed between a pair of adjacent protrusions.

12. The battery according to claim 1,
wherein the gasket has a sub-protrusion that protrudes toward the inner surface of the battery housing based on a state before being compressed.

13. A battery pack comprising a battery according to any one of claims 1 to 12.

14. A vehicle comprising a battery pack according to claim 13.
